# EUROPEAN PATENT APPLICATION

(11) **EP 2 740 369 A1**
(43) Date of publication of application: **11.06.2014**
(21) Application number: 12275195.1
(22) Date of filing: 07.12.2012
(51) Int. Cl.: A23G 1/30, A23G 1/00, A23G 1/36, A23G 1/38

(54) **Process for preparing a confectionery ingredient or product**

(71) Applicant: LODERS CROKLAAN B.V., 1521 AZ Wormerveer (NL)
(72) Inventor: Slager, Hendrikus, 1521 AZ Wormerveer (NL)
(74) Representative: Potter Clarkson LLP

(57) **Abstract**

A process for preparing a confectionery ingredient or a confectionery product comprises mixing cocoa press cake with a non-cocoa vegetable fat.

## Description

This invention relates to a process for preparing a confectionery ingredient or a confectionery product and to the confectionery ingredient or confectionery product produced by the process.

Many confectionery products such as chocolate and chocolate-like products contain triglyceride fats. The fats impart beneficial textural and organoleptic properties to the products. For example, the flavour release and cool taste of chocolate is at least partly due to the melting profile of the triglyceride fats that it contains.

Chocolate contains cocoa butter as the main or sole triglyceride fat. However, there is a market for chocolate-like products in which the cocoa butter is partly or completely replaced by other triglyceride fats. These chocolate-like products are also known as compound products.

Bakery products such as donuts, cakes, cookies, biscuits and pastries are often coated with a layer of chocolate. The coating can be partial or complete. Although the coating can be of chocolate, it is sometimes preferable to use a chocolate-like composition instead. Compound coatings of this type can also be applied to chocolate, fillings and nuts and used in other confectionery products.

Chocolate is typically made from cocoa liquor (chocolate liquor or melted cocoa mass) by adding sugar and additional cocoa butter. When milk or dark chocolate-like compositions are made, the component fat or fats may be mixed with cocoa powder to form a substitute for the cocoa liquor.

EP-A0966886 describes a cocoa liquor substitute obtained by mixing cocoa parts with a confectionery fat. The cocoa liquor substitute is produced by a process which involves roasting a mixture of cocoa parts and the fat.

Cocoa powder is formed from cocoa liquor by pressing to remove most of the cocoa butter, typically using a hydraulic press, and then processing the solid residue known as "press cake", "cocoa press cake" or "cocoa cake" that remains. The press cake is very hard and is milled using a rotor/stator mixer to produce cocoa powder which usually contains around 10-22 % residual cocoa butter. The cocoa powder needs special handling in the same way as many other industrially produced powders and has a tendency to stick and form clumps. There is also a risk of explosion and/or a fire when milling cocoa cake and handling cocoa powder.

Cocoa powders are discussed in Dyer, Alkalized Cocoa Powders, 57th PMCA Production Conference, 2003, pages 128 to 135.

The problems of handling cocoa powder and a solution of crystallising the cocoa butter that it contains are described in:
hftp://www.buhlergroup.com/northamerica/downloads/Cocoa_Powder_CPC.pdf.

There remains a need for an improved process for making confectionery ingredients, such as cocoa liquor substitutes, and confectionery products, such as chocolate-like products, made from the confectionery ingredients. In particular, there is a need to simplify the process. There is a further need to make the process less expensive. There is also a need to make the process safer. Finally, there is a need to reduce the likelihood of microbial contamination during the process. The present invention addresses these problems.

According to the invention, there is provided a process for preparing a confectionery ingredient or a confectionery product comprising mixing cocoa press cake with a non-cocoa vegetable fat.

In another aspect, the invention provides the use of cocoa press cake in combination with non-cocoa vegetable fat for producing a chocolate-like confectionery product or a confectionery ingredient.

Further aspects of the invention include: the use of cocoa press cake for producing a chocolate-like confectionery product or a confectionery ingredient in combination with non-cocoa vegetable fat; and the use of non-cocoa vegetable fat for producing a chocolate-like confectionery product or a confectionery ingredient in combination with cocoa press cake.

Also provided by the invention is a confectionery ingredient produced by the process of the invention.

Further provided by the invention is a confectionery product produced by the process of the invention.

It has been found according to the invention that a confectionery ingredient, such as cocoa liquor substitute (or cocoa mass substitute (CMS)), can be formed without the need for a step of isolating cocoa powder. Instead, it has been found possible to produce the confectionery ingredient comprising non-cocoa vegetable fat directly from the cocoa press cake. Thus, the step of forming cocoa powder is eliminated and there is no requirement for handling a powder. The confectionery ingredient thus produced can be used for the manufacture of confectionery products, such as chocolate-like products.

Thus, the process of the invention preferably does not involve the use of cocoa powder. The cocoa solids in the confectionery ingredient or confectionery product are derived from the cocoa press cake without isolating the cocoa solids as cocoa powder.

The terms "cocoa liquor substitute" and "substitute cocoa liquor" as used herein mean a composition that can be used to replace cocoa liquor and form a chocolate-like confectionery product and that contains cocoa solids and non-cocoa vegetable fat (i.e., a fat other than cocoa butter).

The process of the invention uses cocoa press cake. Typically, the cocoa press cake is produced by pressing cocoa liquor to form the cocoa press cake and cocoa butter. The cocoa butter content of the press cake is preferably less than 25 % by weight, more preferably less than 15 % by weight, such as from 1 % to 14 % by weight or from 5 % to 22 % by weight, typically from 10 % to 12 % by weight. The apparatus that is used in this process is usually a hydraulic press and the type of equipment and the method for operating it are well known to those skilled in the art.

The cocoa press cake is a solid mass. This is preferably used directly in the process of the invention, optionally after being broken up into smaller pieces. The smaller pieces of press cake after removal from the press are sometimes known as kibbled press cake and these may be used in the process of the invention. The size of the cocoa press cake, even if broken up before being used in the invention, will be much larger than that of cocoa powder. The cocoa press cake used in the invention is not a powder. Typically, less than 10% by weight of the cocoa press cake has a particle size of less than 100µm. Usually, the cocoa press cake will consist of one or more pieces having a size of at least 10 mm, such as from 10 mm to 100 mm.

The cocoa press cake will typically have a fat content in the range of from 8 to 22% by weight, more preferably from 10 to 12% by weight.

The cocoa press cake may be provided at a temperature of above 30 °C, such as from 40 to 80 °C. This elevated temperature may be a consequence of the conditions used in the press.

The cocoa press cake is mixed with the fat. The fat may be a single fat or a mixture of two or more different fats. The fat is predominantly or wholly in liquid form during the mixing step, preferably at least 95% by weight of the fat is liquid when mixed with the cocoa press cake. The cocoa press cake is typically mixed with the fat at a temperature of from 25 to 100°C, more preferably from 30 to 90°C, even more preferably from 35 to 55°C, such as from 45 to 50 °C. The melting point of the fat is preferably below the mixing temperature in the process of the invention.

The fat is preferably mixed with the cocoa press cake in a mixer. The mixer will reduce the size of the cocoa press cake. Preferably, the size of the cocoa press cake is reduced such that it is converted into particles having a size of less than 1000 µm, more preferably at least 99% by weight of the particles have a size of less than 75 µm. Thus, the cocoa press cake is preferably milled during the mixing process in the presence of the liquid fat. The resulting product is preferably a homogeneous liquid mixture.

The cocoa press cake is mixed with the fat in the process of the invention. The fat is a non-cocoa vegetable fat. The fat may be a single fat or a mixture of two or more different fats. Preferably, the fat is a lauric fat. Lauric fats include coconut oil, palm kernel oil, fractions thereof (such as palm kernel stearin) and mixtures thereof. The fats are optionally hydrogenated. It is particularly preferred that the fat is palm kernel stearin, optionally hydrogenated (although preferably not hydrogenated), or a fraction thereof.

The weight ratio of cocoa press cake to non-cocoa vegetable fat is preferably in the range of from 1:3 to 3:1, more preferably from 1:2 to 2:1.

The product of the process of the invention may be a confectionery ingredient or a confectionery product.

A confectionery ingredient may be, for example, a substitute cocoa liquor. Substitute cocoa liquor may comprise as components the cocoa press cake, the fat and optionally emulsifier (e.g., lecithin, PGPR, sorbitan tristearate or a mixture thereof). In a preferred embodiment, the confectionery ingredient consists essentially of, or consists of, the cocoa press cake, the non-cocoa vegetable fat and, optionally, an emulsifier, (e.g., lecithin, PGPR, sorbitan tristearate or a mixture thereof, more preferably sorbitan tristearate).

Preferably, the confectionery ingredient is a homogeneous liquid mixture. The mixture is liquid at temperatures of about 35 °C and higher.

The process of the invention preferably further comprises the step of combining the confectionery ingredient with sugar (preferably sucrose), one or more palm oil fractions and/or cocoa butter and, optionally, skimmed milk powder. The resulting mixture is optionally refined to reduce the particle size of the ingredients. Such steps can lead to the formation of a confectionery product, in particular a chocolate-like product, from the confectionery ingredient.

The invention has the advantage that the size of cocoa particles required for a chocolate-like product is obtained relatively easily by breaking up the agglomerates of cocoa particles that are present in the substitute cocoa liquor.

The confectionery product produced according to the invention is typically a chocolate-like product and may, for example, be selected from bars, fillings, biscuit creams and confectionery coatings. The confectionery products will preferably comprise one or more further ingredients such as sugar (more preferably sucrose), skimmed milk powder, one or more palm fractions, cocoa butter and emulsifier (e.g., lecithin, PGPR, sorbitan tristearate or a mixture thereof). Further optional components include flavouring (e.g., mint, orange, etc) and inclusions such as confectionery and fruit pieces.

Preferably, the chocolate-like confectionery product comprises from 30 to 70% by weight sucrose, from 10 % to 30% by weight of a palm fat and from 8 to 50% by weight, more preferably from 20 to 40 %, such as 25 to 35 % by weight, of the confectionery ingredient. The palm fat is preferably a fractionated, optionally hydrogenated, palm kernel fat.

In one preferred embodiment, the invention is a process for preparing a confectionery ingredient comprising mixing cocoa press cake with a lauric fat selected from coconut oil, palm kernel oil, fractions thereof and mixtures thereof in a weight ratio of from 1:3 to 3:1 and optionally up to 5%, more preferably from 0.1 to 1 %, by weight of an emulsifier.

In another preferred embodiment, the invention is a process for preparing a confectionery product comprising mixing cocoa press cake with a non-cocoa vegetable fat in a weight ratio of from 1:3 to 3:1 and optionally up to 5% by weight of an emulsifier to form a confectionery ingredient and combining from 10 to 50% (such as 10 to 30%) by weight of the confectionery ingredient with from 30 to 70% by weight sucrose, from 10 to 30% by weight of a palmkernel fat, and optionally up to 5 % by weight skimmed milk powder, to form the confectionery product.

Coatings may be applied to a confectionery or bakery product. The confectionery products include ice cream. The compositions may also be used as coatings on products that are sold and/or consumed at ambient temperature (i.e., from 5 to 30 °C).

The term "bakery products", as used herein, refers to products that are typically produced or sold in a bakery and which have preferably been baked or fried, although they can be produced in other ways. The coating can be partial or complete and, when the coating is complete, the composition will encapsulate the bakery product. The bakery products are preferably made using flour. Examples of bakery products are donuts, cakes, biscuits, pastries and cookies. Donuts optionally contain jam or jelly.

Coated bakery products can be produced by heating the composition to around or above the melting point of the composition (e.g., above 35 °C), applying the composition to an uncoated bakery product (e.g., by pouring the composition onto the uncoated bakery product or by immersing the uncoated bakery product in the composition) and lowering the temperature to below the melting point of the composition by allowing it to cool (or by forced cooling). Suitable methods are well-known to those skilled in the art.

The coated bakery products may be further decorated with ingredients that adhere to the coating of the composition such as icing and/or chocolate strands or chips or sugar strands (which can be of a single colour or multi-coloured).

Coatings made using the composition may have good gloss and/or bloom resistance. The compositions may have the further advantage of easier processing to form coatings, for example improved viscosity for enrobing. Further advantages include better heat resistance, improved demoulding properties and improved eating qualities.

Confectionery products may also be coated with a composition of the invention. Suitable confectionery products include chocolates, chocolate-like products and jellies.

The following non-limiting examples illustrate the invention and do not limit its scope in any way. In the examples and throughout this specification, all percentages, parts and ratios are by weight unless indicated otherwise.

### Examples

### Example 1

Cocoa press cake used in this example was obtained on an industrial scale in conventional cocoa presses by pressing a non-alkalized liquid cocoa mass, having a cocoa butter fat content of 50-52 wt%, until cocoa cake was produced with a fat content of 10-12 wt% cocoa butter.

Cocoa mass substitute (CMS) was produced by feeding the cocoa cakes and a fractionated, hydrogenated palm kernel fat simultaneously into a high speed cutter in a weight ratio of 1:1 and at a temperature of 45-50 °C. This resulted in a liquid mass (CMS) containing <1% by weight of cocoa agglomerates with the majority (> 50% by weight) having a size between 0.5 and 1 mm. The liquid CMS was moulded in chocolate moulds to produce bars. The resulting bars had the same hardness as the standard cocoa butter based cocoa mass.

Two coatings were produced, having the same effective recipe, one based on the CMS and the other based on traditional cocoa powder and the fat used in the CMS, as follows:
Recipes used:

| | Reference | Test |
|---|---|---|
| Fat | 32 % | 17 % |
| Sugar | 48 % | 48 % |
| Cocoa powder 10/12 | 15 % | - |
| Skimmed milk powder | 5% | 3.6% |
| CMS (55% fat) | - | 30 % |
| Lecithin | 0.4% | 0.4% |

Resulting composition:

| | | |
|---|---|---|
| Fat content | 33.5 % | 33.5 % |
| Fat free cocoa parts | 13.5 % | 13.5% |

The production of the coatings was done in the usual way by mixing all the ingredients at 45-50 °C, feeding into a ball mill and refining for 30 minutes (the refining only applies to the sugar and milk powder parts in the recipe; the cocoa powder particles need only deagglomeration).

Both coatings showed the same performance and no cocoa particles could be noticed, showing that the traditional coating process is able to deagglomerate effectively smaller pieces of cocoa agglomerates that may be left in the CMS during its production.

## Claims

1. A process for preparing a confectionery ingredient or a confectionery product comprising mixing cocoa press cake with a non-cocoa vegetable fat.

2. Process as claimed in Claim 1, wherein the cocoa press cake is produced by pressing cocoa liquor to form the cocoa press cake and cocoa butter.

3. Process as claimed in Claim 1 or Claim 2, wherein the fat is a lauric fat.

4. Process as claimed in Claim 3, wherein the fat is palm kernel stearin, optionally hydrogenated, or a fraction thereof.

5. Process as claimed in any one of the preceding claims, wherein the cocoa press cake is mixed with the fat at a temperature of from 25 to 100°C.

6. Process as claimed in any one of the preceding claims, wherein the confectionery ingredient is a homogeneous liquid mixture.

7. Process as claimed in any one of the preceding claims, wherein the weight ratio of cocoa press cake to non-cocoa vegetable fat is in the range of from 1:3 to 3:1.

8. Process as claimed in any one of the preceding claims, further comprising combining the confectionery ingredient with sugar and/or cocoa butter.

9. Process as claimed in Claim 8 wherein the product of the process is a chocolate-like confectionery product.

10. Process as claimed in Claim 9, wherein the chocolate-like confectionery product comprises from 30 to 70% by weight sugar, from 10 to 30% by weight of a palm fat and from 8 to 50% by weight of the confectionery ingredient.

11. Process as claimed in any one of the preceding claims, wherein less than 10% by weight of the cocoa press cake has a particle size of less than 100µm.

12. Process as claimed in any one of the preceding claims, wherein the confectionery ingredient consists essentially of the cocoa press cake, the non-cocoa vegetable fat and, optionally, an emulsifier.

13. Use of cocoa press cake for producing a chocolate-like confectionery product or a confectionery ingredient in combination with non-cocoa vegetable fat.

14. Use of non-cocoa vegetable fat for producing a chocolate-like confectionery product or a confectionery ingredient in combination with cocoa press cake.

15. Confectionery ingredient or confectionery product produced by the process of any one of Claims 1 to 12.
